# EUROPÄISCHE PATENTSCHRIFT

(11) **EP 3 090 642 B1**
(45) Veröffentlichungstag und Bekanntmachung des Hinweises auf die Patenterteilung: **31.07.2019**
(21) Anmeldenummer: 16000781.1
(22) Anmeldetag: 06.04.2016
(51) Int. Cl.: A44B 15/00, B62B 3/00, G07F 7/06, B42F 1/10, B62B 3/14

(54) **MÜNZPFANDERSATZ**
COIN DEPOSIT REPLACEMENT
INSERT POUR MONNAIE DE CONSIGNE

(30) Priorität: 05.05.2015 DE 202015003306 U; 11.09.2015 DE 202015006462 U
(43) Veröffentlichungstag der Anmeldung: 09.11.2016
(73) Patentinhaber: Müller, Heinz, 71723 Grossbottwar (DE)
(72) Erfinder: Müller, Heinz, 71723 Grossbottwar (DE); Eberlein, Herbert, 89347 Bubesheim (DE)

(56) Entgegenhaltungen:
- DE-A1- 19 704 211
- DE-U1- 29 510 138
- FR-A1- 2 711 107
- FR-A1- 2 843 692
- FR-A1- 2 979 880

## Beschreibung

Die Erfindung betrifft jeweils einen Münzpfandersatz zum Auslösen eines mit einem Münzpfandschloss ausgestatteten Gebrauchsgegenstandes gemäß dem Oberbegriff der Patentansprüche 1 und 2.

Münzpfandschlösser finden Verwendung bei auszuleihenden Gebrauchsgegenständen, insbesondere bei Einkaufswagen. Mit Hilfe der Münzpfandschlösser lassen sich beispielsweise Einkaufswagen in bekannter Weise in Reihen gestapelt aneinanderketten. Will man einen Einkaufswagen einer Reihe entnehmen, muss zuvor eine Münze oder ein entsprechender Münzpfandersatz in das Münzpfandschloss eingesteckt werden, um die bestehende Verriegelung zu lösen.

Da man nicht immer eine passende Münze zur Hand hat, wurden in der Vergangenheit verschiedene Münzpfandersatzarten entwickelt.

Das Dokument DE 203 18 377 U1 beschreibt einen Pfand-Chip mit Notizzettelhalter. Dieser als Münzpfandersatz vorgesehene Pfand-Chip weist eine Scheibe in Form eines gültigen Zahlungsmittels auf, das mit Hilfe eines flexiblen Zwischenstücks mit einem Gehäuse verbunden ist, in dem ein Permanentmagnet eingebaut ist. Beim Anlegen des Permanentmagneten an ein eisernes Teil des Einkaufswagens lässt sich bei diesem Vorgang ein Zettel dazwischenklemmen.

Durch das Dokument DE 10 2012 014 521 A1 erfährt man von einem flexiblen Einkaufszettelhalter, der am Schiebegriff eines Einkaufswagens befestigbar ist. Dieser Zettelhalter weist ein Klemmbrett, einen Chiphalter, einen Kugelschreiberhalter und eine Klemmvorrichtung auf. Der Chip zum Auslösen eines mit einem Münzpfandschloss ausgestatteten Einkaufswagens liegt getrennt vor.

Das Dokument FR 2 843 692 A1 beschreibt einen Münzpfandersatz, bei dem hintereinander ein münzähnlicher Vorsprung, ein Griffabschnitt und eine Befestigungseinrichtung angeordnet sind. Führt man den münzähnlichen Vorsprung in ein Münzpfandschloss ein, ragen der Griffabschnitt und die sich anschließende Befestigungseinrichtung sehr weit nach hinten vor. Ein in der Befestigungseinrichtung eingeklemmter Zettel bildet dann nach hinten das letzte Teil dieser Anordnung.

Ein Münzpfandersatz wird auch durch das Dokument DE 295 10 138 U1 vorgeschlagen. Dieser Münzpfandersatz weist einen münzähnlichen Vorsprung, ein Klemmbrett zur Aufnahme von wenigstens einem Zettel und ein Verbindungsglied auf, wobei das Verbindungsglied den münzähnlichen Vorsprung und das Klemmbrett gelenkig so miteinander verbindet, dass in eingestecktem Zustand des münzähnlichen Vorsprungs in ein Münzpfandschloss das Klemmbrett durch Umschlag so auf dem Münzpfandschloss zu liegen kommt, dass der im Klemmbrett eingeklemmte Zettel nach oben sichtbar zu liegen kommt. Liegt das Klemmbrett nicht auf, hängt dieses nach unten, so dass ein Text auf dem Zettel nicht lesbar ist. Zum Einklemmen eines Zettels ist ein federnder Klemmhalter und ein weiterer, in einem Abstand angeordneter Klemmhalter erforderlich. Der so gestaltete Münzpfandersatz besteht aus mindestens fünf Bauteilen.

Schließlich bleibt noch eine flache Blattgutklammer zu erwähnen, die im Dokument DE 197 04 211 A1 beschrieben ist. Die Blattgutklammer weist einen mit einem Befestigungselement ausgestatteten Grundkörper auf, mit dem die Blattgutklammer an geeigneten Stellen befestigbar ist. Das Befestigungselement ist in Form einer Zunge gestaltet. Das genannte Dokument nennt eine Vielzahl von Gegenständen, an welchen die Blattgutklammer, bevorzugt durch Kleben, befestigbar ist. Ein Hinweis auf eine Verwendung bei einem Münzpfandersatz findet sich im genannten Dokument jedoch nicht.

Ausgehend von diesem Stand der Technik besteht die Aufgabe der Erfindung darin, jeweils einen Münzpfandersatz der eingangs genannten Art so weiterzuentwickeln, dass diese möglichst klein und handlich gestaltet sind und trotzdem die Möglichkeit zur Anbringung eines Zettels bieten.

Die Lösungen der gestellten Aufgabe sind im kennzeichnenden Teil der Patentansprüche 1 und 2 beschrieben.

Der Vorteil der Erfindung besteht darin, dass beide aufgefundenen Lösungen jeweils einen kleinen und handlichen Münzpfandersatz entstehen lassen, wobei der erste vorgeschlagene Münzpfandersatz zweiteilig und der zweite vorgeschlagene Münzpfandersatz einteilig gestaltet sind und somit mit einem Minimum an Teilen auskommen. Ein Klemmbrett für das Halten eines Zettels, wie im Stand der Technik vorgeschlagen, ist nicht erforderlich. Befindet sich der jeweilige Münzpfandersatz in einem Münzpfandschloss, liegt ein vom jeweiligen Münzpfandersatz getragener Zettel jeweils auf dem Münzpfandschloss auf. Dadurch kann jeder Münzpfandersatz äußerst kurz gestaltet werden.
Es erweist sich als vorteilhaft, wenn der untere Rand des Griffabschnittes, der ja nach hinten vom Münzpfandschloss vorsteht, als gerundete Verdickung ausgebildet ist, um keine scharfen Kanten entstehen zu lassen, die eine Unfallgefahr bedeuten könnten.
Beim einteiligen Münzpfandersatz erweist es sich ebenfalls als vorteilhaft, wenn die Dicke der Zunge kleiner ist als der außerhalb der Verdickung gemessene Teil des Basiskörpers. Dadurch lassen sich die federnden Eigenschaften der Zunge fein abstimmen.
Jeder vorgeschlagene Münzpfandersatz lässt sich aufgrund seiner geringen Größe bequem in der Jacken- oder Hosentasche oder auch im Auto, etwa in einem kleinen Fach unterbringen.

Die Erfindung wird anhand von Ausführungsbeispielen näher erläutert. Die Beispiele entsprechend Fig. 1, 2 und 4 sind nur informativ und nicht erfindungswesentlich. Es zeigt
- Fig. 1: einen Münzpfandersatz in Draufsicht;
- Fig. 2: den in Fig. 1 gezeigten Münzpfandersatz in Seitenansicht sowie
- Fig. 3: bis Fig. 5 drei weitere zweckmäßige Ausführungsbeispiele.

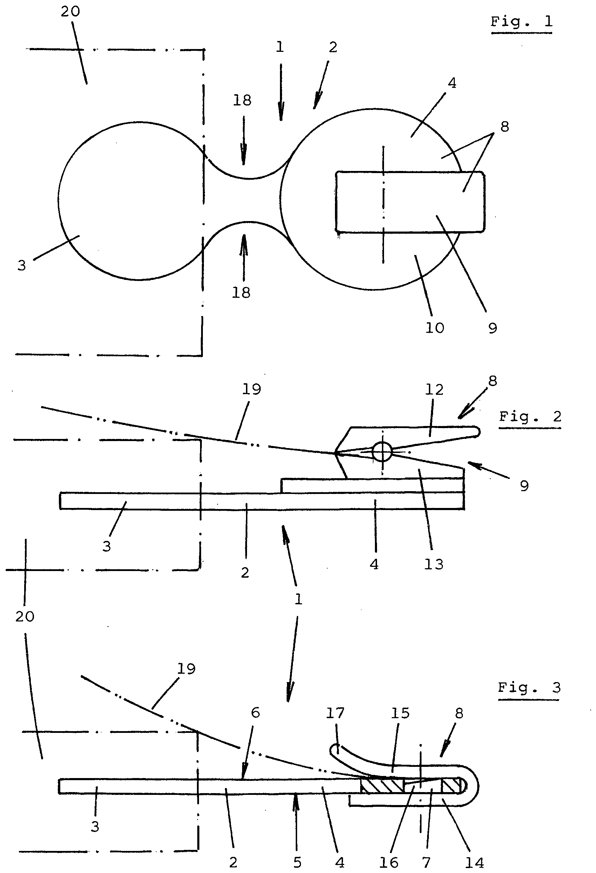

Der in Fig. 1 dargestellte Münzpfandersatz 1 weist einen flachen Basiskörper 2 auf, der annähernd so dick ist, wie eine Münze, die für die Funktion eines Münzpfandschlosses 20 erforderlich ist. In Europa ist dies gewöhnlich eine 1-Euro-Münze. Der Basiskörper 2 ist ein relativ flaches Teil, an dem an einer Seite ein münzähnlicher Vorsprung 3 vorgesehen ist, der die Funktion einer Münze übernimmt. An den münzähnlichen Vorsprung 3 schließt ein Griffabschnitt 4 an, der zum Ergreifen des Münzpfandersatzes 1 bestimmt ist. Der Münzpfandersatz 1 besitzt somit einen münzähnlichen Vorsprung 3 sowie einen Griffabschnitt 4. Der Griffabschnitt 4 weist eine Befestigungseinrichtung 8 auf, die sich zum lösbaren Befestigen eines Zettels 19 oder dergleichen eignet, siehe Fig. 2. Im Beispiel ist die Befestigungseinrichtung 8 klammerartig ausgebildet, die mit Hilfe eines scheibenartigen Bodenabschnittes 10 am Griffabschnitt 4, etwa durch Kleben oder Verrasten unverlierbar am Griffabschnitt 4, und dadurch am Basiskörper 2, befestigt ist, wobei am Bodenabschnitt 10 eine wäscheklammerartige Befestigungseinheit 9 vorgesehen ist, an der man einen Zettel 19 oder dergleichen lösbar einklemmen kann. Die Befestigungseinrichtung 8 wird im Ausführungsbeispiel durch den scheibenartigen Bodenabschnitt 10 und durch die Befestigungseinheit 9 gebildet Der Griffabschnitt 4 ist, wie anhand der Zeichnung deutlich erkennbar, gerundet gestaltet. Zwischen dem münzähnlichen Vorsprung 3 und dem Griffabschnitt 4 ist am Basiskörper 2 eine Verengung 18 vorgesehen, deren zwischen den beiden Rundungen gemessene Breite kleiner ist als der Durchmesser des münzähnlichen Vorsprunges 3 und der Durchmesser des Bodenabschnittes 10.

Fig. 2 zeigt den eben beschriebenen Münzpfandersatz 1 in Seitenansicht. Man erkennt den flachen Basiskörper 2, an dem an einer Seite (in der Zeichnung links) der münzähnliche Vorsprung 3 und an der gegenüberliegenden Seite (in der Zeichnung rechts) der Griffabschnitt 4 und die Befestigungseinrichtung 8 vorgesehen sind. Die Zeichnung zeigt ferner den scheibenartigen Bodenabschnitt 10 sowie die Befestigungseinheit 9, welche zwei federbelastete Klemmteile 12, 13 aufweist. Das obere Klemmteil 12 lässt sich gegenüber dem unteren Klemmteil 13 unter Vorspannung, an die Funktion einer Wäscheklammer erinnernd, um eine horizontale Achse bewegen.

Fig. 3 offenbart einen Münzpfandersatz 1, bei dem der Basiskörper 2 in etwa jenem Basiskörper 2 entspricht, wie in Fig. 1 und Fig. 2 vorgeschlagen. Bei diesem Ausführungsbeispiel ist die Befestigungseinrichtung 8 einteilig gestaltet. Die aus elastischem Material bestehende Befestigungseinrichtung 8 umfasst einen Teil des Griffabschnittes 4. Ein unterer Abschnitt 14 der Befestigungseinrichtung 8 liegt an der Unterseite 5 des Griffabschnittes 4 und damit des Basiskörpers 2 an. Ein mit dem unteren Abschnitt 14 verbundener oberer Abschnitt 15 wiederum liegt unter Vorspannung auf der Oberseite 6 des Griffabschnittes 4 und damit des Basiskörpers 2 an. Im Griffabschnitt 4 ist beispielsweise ein senkrechter, nicht kreisförmiger Durchbruch 7 vorgesehen, in den ein vom unteren Abschnitt 14 nach oben gerichteter, ebenfalls nicht kreisförmiger Vorsprung 16 rast- und formschlüssig eingefügt ist. Beim Aufsetzen der so gestalteten Befestigungseinrichtung 8 wird diese in der Zeichnung von rechts nach links auf den Griffabschnitt 4 geschoben, wobei bei diesem Vorgang der Vorsprung 16 in den Durchbruch 7 einrastet, so dass die Befestigungseinrichtung 8 nicht drehbar sowie ortsfest und unverlierbar mit dem Basiskörper 2 verbunden ist. Die Befestigungseinrichtung 8 ist demnach mit dem Griffabschnitt 4 rastschlüssig verbunden. Der untere Abschnitt 14 kann mit dem oberen Abschnitt 15 auch so verbunden sein, dass eine in der Zeichnung nach links offene Tasche gebildet ist, welche einen Teil des Griffabschnittes 4 allseitig umfasst. Der obere Abschnitt 15 der Befestigungseinrichtung 8 ist endseitig etwas nach oben gebogen, so dass dadurch ein kleines Griffelement 17 gebildet ist. Beim Anheben des oberen Abschnittes 15 mit Hilfe des Griffelementes 17 entsteht zwischen dem oberen Abschnitt 15 und dem Griffabschnitt 4 ein kleiner Spalt, in den sich ein Zettel 18 einfügen lässt. Nach dem Loslassen des oberen Abschnittes 15 schnappt dieser nach unten und wird gegen die Oberseite 6 des Griffabschnittes 4 gedrückt, so dass der Zettel 19 eingeklemmt ist. Ausgehend von dieser Bauweise und in Anlehnung an die Zeichnung ist es im Zuge einer weiteren Vereinfachung möglich, auf den unteren Abschnitt 14, auf den Vorsprung 16 und auf den Durchbruch 7 zu verzichten und dafür den oberen Abschnitt 15 der Befestigungseinrichtung 8 am Ende des Griffabschnittes 4 (in der Zeichnung rechts) in einer eine Klemmwirkung erzeugenden Weise an den Basiskörper 2 anzuformen, so dass der so gestaltete Münzpfandersatz 1 als ein einziges Teil vorliegt. Die Befestigungseinrichtung 8 wird dann nur noch durch den oberen Abschnitt 15 und durch einen Teil des Griffabschnittes 4 gebildet, wobei der obere Abschnitt 15 gegen die Oberseite 6 des Griffabschnittes 4 gedrückt wird. Der münzähnliche Vorsprung 3 und auch eine mögliche Verengung 18 bleiben unverändert. Ein derartiger Münzpfandersatz 1 kann bevorzugt aus einem geeigneten elastischen und bruchfesten Kunststoff angefertigt werden. Eine Ausführung aus bevorzugt federndem Metall ist natürlich ebenfalls möglich.

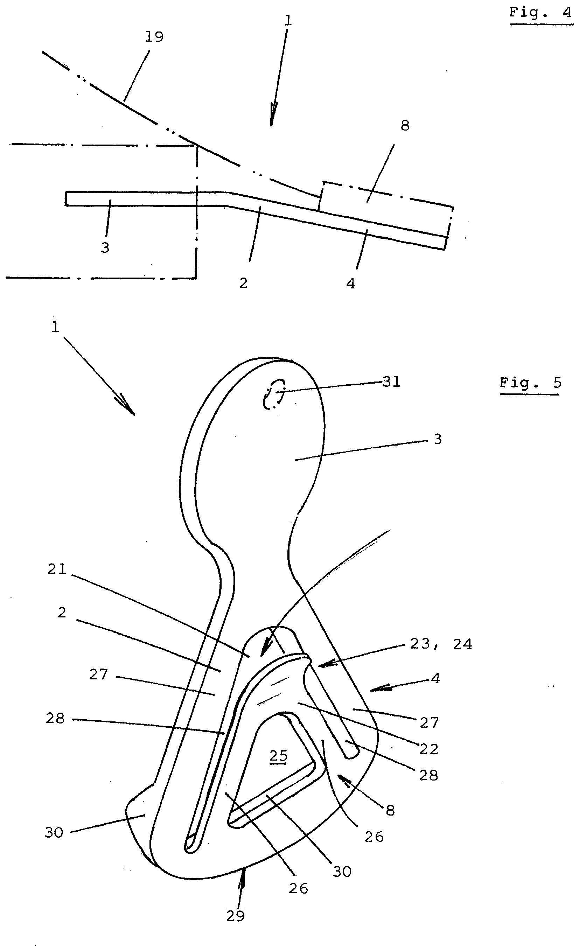

Fig. 4 zeigt einen weiteren zweckmäßig gestalteten Münzpfandersatz 1, bei dem der Basiskörper 2 zwischen dem münzähnlichen Vorsprung 3 und dem Griffabschnitt 4 leicht nach unten abgewinkelt ist. Der münzähnliche Vorsprung 3 und der Griffabschnitt 4 sind demnach winklig zueinander angeordnet. Je nach Ausgestaltung eines Münzpfandschlosses 20, das in den zuvor beschriebenen Zeichnungen strichpunktiert angedeutet ist, kann die abgewinkelte Form des Münzpfandersatzes 1 von Vorteil sein, um einen von der Befestigungseinrichtung 8 gehaltenen Zettel 19 noch besser lesen zu können.

Fig. 5 zeigt einen weiteren Münzpfandersatz 1. Der Basiskörper 2 ist wieder mit einem münzähnlichen Vorsprung 3 ausgestattet, an den sich der Griffabschnitt 4 anschließt. Der Griffabschnitt 4 weist einen Durchbruch 21 auf. Im Durchbruch 21 befindet sich eine Zunge 22, deren freies Ende 23 zum münzähnlichen Vorsprung 3 gerichtet ist. Die Zunge 22 kann federnd ausgebildet sein. Durch den Durchbruch 21 sind am Griffabschnitt 4 zwei benachbarte Stege 27 gebildet. Zwischen den Stegen 27 und der Zunge 22 sind Zwischenräume 28 gebildet. Das freie Ende 23 der Zunge 22 ist im Beispiel so gestaltet, dass ein Bogenabschnitt 24 vom Griffabschnitt 4 weggeführt ist. Das freie Ende 23 der Zunge 22 kann auch geradlinig schräg vom Griffabschnitt 4 wegragen. Solche Anordnungen lassen zusammen mit den Stegen 27 einen Gesamtzwischenraum entstehen, in den ein Zettel oder dergleichen, in der Zeichnung von oben nach unten, so eingeführt werden kann, dass sich ein Teil des Zettels zwischen der Zunge 22 und den beiden Stegen 27 befindet, somit zwischen der Zunge 22 und den Stegen 27 eingeklemmt ist und deshalb in dieser Lage lösbar arretiert ist. Der leicht gebogene Pfeil zeigt die Einschubrichtung des Zettels. Der Griffabschnitt 4 weist demnach eine Befestigungseinrichtung 8 zum lösbaren Befestigen eines Zettels oder dergleichen auf. Im unteren Bereich der Zunge 22 kann an der Zunge 22 eine Öffnung 25 vorgesehen sein, so dass an der Zunge 22 zwei weitere Stege 26 gebildet sind. Durch diese Maßnahme lässt sich die federnde Wirkung der Zunge 22 beeinflussen. Die Dicke der Zunge 22 kann kleiner sein als die Dicke des außerhalb der Verdickung 30 gemessenen Teils des Basiskörpers 2. Der untere Rand 29 des Griffabschnittes 4 ist als Verdickung 30 ausgebildet, so dass sich durch den dadurch gebildeten Wulst der Münzpfandersatz 1 leicht und sicher halten und führen lässt. Die Befestigungseinrichtung 8 ist durch die Zunge 22 und durch die beiden Stege 27 gebildet. Der münzähnliche Vorsprung 3 und der Griffabschnitt 4 können gelenkig so miteinander verbunden sein, dass sich der Griffabschnitt 4 gegenüber dem münzähnlichen Vorsprung 3 bevorzugt etwas schwergängig drehen lässt. Die Drehachse läge, folgt man der Zeichnung, in der Bildebene und verliefe gemäß der vorliegenden Darstellung senkrecht. Da bei bekannten Münzpfandschlössern 20 der Münzschlitz waagrecht oder auch senkrecht angeordnet sein kann, kann der Münzpfandersatz 1 durch Drehen des Griffabschnittes 4 den jeweiligen Münzpfandschlössern 20 so angepasst werden, dass ein im Münzpfandersatz 1 befindlicher Zettel immer flächig, also horizontal, und damit gut lesbar, angeordnet ist und am Münzpfandschloss 20 aufliegt, siehe auch Fig. 1 bis 4. Die Befestigungseinrichtung 8 befindet sich bei beiden beschriebenen Ausführungsbeispielen mit Blick auf die flächigen Seiten des münzähnlichen Vorsprungs 3 und des Griffabschnitts 4 innerhalb des gemeinsamen, vom münzähnlichen Vorsprung 3 und vom Griffabschnitt 4 gebildeten Grundrisses. Gleiches lässt sich auch auf die Ausführungsbeispiele gemäß Fig. 1, 2 und 4 übertragen, auch wenn dort die zeichnerischen Darstellungen diese Möglichkeit nur teilweise widergeben.

Der münzähnliche Vorsprung 3 kann schließlich auch mit einem kleinen Loch 31 ausgestattet sein, das sich am münzähnlichen Vorsprung 3 befindet und mit dessen Hilfe der Münzpfandersatz 1, z. B. an einem bekannten Schlüsselanhänger, befestigbar ist. Das Loch 31 ist außermittig angeordnet und in der Zeichnung strichpunktiert dargestellt.

Unter dem Begriff Befestigungseinrichtung 8 werden im Sinne der Erfindung alle denkbaren, hier nicht näher beschriebenen Befestigungseinrichtungen 8 erfasst, die aufgrund ihrer Gestaltung mit dem Griffabschnitt 4, und damit mit dem Basiskörper 2, verbunden oder in diesen integriert und in der Lage sind, einen in der Befestigungseinrichtung 8 eingefügten oder eingeklemmten Zettel 19 dauerhaft zu halten.

## Patentansprüche

1. Münzpfandersatz (1) zum Auslösen eines mit einem Münzpfandschloss (20) ausgestatteten Gebrauchsgegenstandes, wobei der Münzpfandersatz (1) einen Basiskörper (2) aufweist, der einen zum Einstecken in das Münzpfandschloss (20) bestimmten münzähnlichen Vorsprung (3) besitzt und einen Griffabschnitt (4) aufweist, der mit einer Befestigungseinrichtung (8) zum lösbaren Befestigen eines Zettels (19) ausgestattet ist, **dadurch gekennzeichnet, dass** die Befestigungseinrichtung (8) mit einem unteren Abschnitt (14) an der Unterseite (5) des Griffabschnitts (4) und mit einen oberen Abschnitt (15) an der Oberseite (6) des Griffabschnitts (4) anliegt und dass der obere Abschnitt (15) ein Griffelement (17) aufweist, das zum Anheben des oberen Abschnitts (15) bestimmt ist.

2. Münzpfandersatz (1) zum Auslösen eines mit einem Münzpfandschloss (20) ausgestatteten Gebrauchsgegenstandes, wobei der Münzpfandersatz (1) einen Basiskörper (2) aufweist, der einen zum Einstecken in das Münzpfandschloss (20) bestimmten münzähnlichen Vorsprung (3) besitzt und einen Griffabschnitt (4) aufweist, der mit einer Befestigungseinrichtung (8) zum lösbaren Befestigen eines Zettels (19) ausgestattet ist, **dadurch gekennzeichnet, dass** der Griffabschnitt (4) mit einem Durchbruch (21) ausgestattet ist und im Durchbruch (21) eine Zunge (22) der Befestigungseinrichtung (8) angeordnet ist, wobei das freie Ende (23) der Zunge (22) zum münzähnlichen Vorsprung (3) gerichtet ist.

3. Münzpfandersatz nach Anspruch 1, **dadurch gekennzeichnet, dass** die Befestigungseinrichtung (8) innerhalb des gemeinsamen, vom münzähnlichen Vorsprung (3) und vom Griffabschnitt (4) gebildeten Grundrisses angeordnet ist.

4. Münzpfandersatz nach Anspruch 1, **dadurch gekennzeichnet, dass** die Befestigungseinrichtung (8) mit dem Griffabschnitt (4) rastschlüssig verbunden ist.

5. Münzpfandersatz nach Anspruch 2, **dadurch gekennzeichnet, dass** der untere Rand (29) des Griffabschnitts (4) als Verdickung (30) gestaltet ist und dass durch die Verdickung (30) ein Wulst zum Halten und Führen des Münzpfandersatzes (1) gebildet ist.

6. Münzpfandersatz nach Anspruch 2 oder 5, **dadurch gekennzeichnet, dass** die Dicke der Zunge (22) kleiner ist als der außerhalb der Verdickung (30) gemessene Teil des Basiskörpers (2).

7. Münzpfandersatz nach Anspruch 2, **dadurch gekennzeichnet, dass** ein Teil des freien Endes (23) der Zunge (22) vom Griffabschnitt (4) wegführend gestaltet ist.

8. Münzpfandersatz nach Anspruch 2, **dadurch gekennzeichnet, dass** der Griffabschnitt (4) und der münzähnliche Vorsprung (3) jeweils gegenläufig drehbar miteinander verbunden sind.

9. Münzpfandersatz nach Anspruch 2, **dadurch gekennzeichnet, dass** der münzähnliche Vorsprung (3) mit einem Loch (31) ausgestattet ist, das außermittig am münzähnlichen Vorsprung (3) angeordnet ist.

10. Münzpfandersatz nach Anspruch 1 oder 2, **dadurch gekennzeichnet, dass** zwischen dem münzähnlichen Vorsprung (3) und dem Griffabschnitt (4) eine Verengung (18) vorgesehen ist.

## Claims

1. Coin-deposit substitute (1) for triggering an everyday item equipped with a coin-deposit lock (20), wherein the coin-deposit substitute (1) has a basic body (2) having a coin-like protrusion (3), which is intended for inserting into the coin-deposit lock (20), and having a grip portion (4), which is equipped with a fastening device (8) for fastening a sheet of paper (19) in a releasable manner, **characterized in that** the fastening device (8) has a lower portion (14) butting against the underside (5) of the grip portion (4) and has an upper portion (15) butting against the upper side (6) of the grip portion (4), and **in that** the upper portion (15) has a grip element (17) intended for raising the upper portion (15).

2. Coin-deposit substitute (1) for triggering an everyday item equipped with a coin-deposit lock (20), wherein the coin-deposit substitute (1) has a basic body (2) having a coin-like protrusion (3), which is intended for inserting into the coin-deposit lock (20), and having a grip portion (4), which is equipped with a fastening device (8) for fastening a sheet of paper (19) in a releasable manner, **characterized in that** the grip portion (4) is provided with a through-passage (21), and the through-passage (21) contains a tongue (22) of the fastening device (8), wherein the free end (23) of the tongue (22) is directed towards the coin-like protrusion (3).

3. Coin-deposit substitute according to Claim 1, **characterized in that** the fastening device (8) is arranged within the common outline formed by the coin-like protrusion (3) and by the grip portion (4).

4. Coin-deposit substitute according to Claim 1, **characterized in that** the fastening device (8) is connected to the grip portion (4) with latching action.

5. Coin-deposit substitute according to Claim 2, **characterized in that** the lower periphery (29) of the grip portion (4) is configured in the form of a thickened portion (30), and **in that** the thickened portion (30) forms a bead for holding and guiding the coin-deposit substitute (1).

6. Coin-deposit substitute according to Claim 2 or 5, **characterized in that** the thickness of the tongue (22) is smaller than that part of the basic body (2) which is measured outside the thickened portion (30).

7. Coin-deposit substitute according to Claim 2, **characterized in that** a part of the free end (23) of the tongue (22) is configured to lead away from the grip portion (4).

8. Coin-deposit substitute according to Claim 2, **characterized in that** the grip portion (4) and the coin-like protrusion (3) are connected to one another such that they can be rotated in opposite directions in each case.

9. Coin-deposit substitute according to Claim 2, **characterized in that** the coin-like protrusion (3) is provided with a hole (31), which is arranged eccentrically on the coin-like protrusion (3).

10. Coin-deposit substitute according to Claim 1 or 2, **characterized in that** a narrowed portion (18) is provided between the coin-like protrusion (3) and the grip portion (4).

## Revendications

1. Jeton de consigne (1) pour la libération d'un objet usuel équipé d'une serrure de consigne (20), dans lequel le jeton de consigne (1) présente un corps de base (2), qui présente une saillie (3) en forme de pièce de monnaie destinée à être insérée dans la serrure de consigne (20) et qui présente une partie de prise (4), qui est équipée d'un dispositif de fixation (8) pour la fixation amovible d'une étiquette (19), **caractérisé en ce que** le dispositif de fixation (8) s'applique avec une partie inférieure (14) sur le côté inférieur (5) de la partie de prise (4) et avec une partie supérieure (15) sur le côté supérieur (6) de la partie de prise (4) et **en ce que** la partie supérieure (15) présente un élément de prise (17), qui est destiné à soulever la partie supérieure (15).

2. Jeton de consigne (1) pour la libération d'un objet usuel équipé d'une serrure de consigne (20), dans lequel le jeton de consigne (1) présente un corps de base (2), qui présente une saillie (3) en forme de pièce de monnaie destinée à être insérée dans la serrure de consigne (20) et qui présente une partie de prise (4), qui est équipée d'un dispositif de fixation (8) pour la fixation amovible d'une étiquette (19), **caractérisé en ce que** la partie de prise (4) est munie d'une découpe (21) et une languette (22) du dispositif de fixation (8) est disposée dans la découpe (21), dans lequel l'extrémité libre (23) de la languette (22) est dirigée vers la saillie en forme de pièce de monnaie (3).

3. Jeton de consigne selon la revendication 1, **caractérisé en ce que** le dispositif de fixation (8) est disposé à l'intérieur du contour commun formé par la saillie en forme de pièce de monnaie (3) et la partie de prise (4).

4. Jeton de consigne selon la revendication 1, **caractérisé en ce que** le dispositif de fixation (8) est assemblé par encliquetage à la partie de prise (4).

5. Jeton de consigne selon la revendication 2, **caractérisé en ce que** le bord inférieur (29) de la partie de prise (4) est formé par une surépaisseur (30) et **en ce qu'**un bourrelet est formé par la surépaisseur (30) pour maintenir et guider le jeton de consigne (1).

6. Jeton de consigne selon une revendication 2 ou 5, **caractérisé en ce que** l'épaisseur de la languette (22) est inférieure à celle de la partie du corps de base (2) mesurée en dehors de la surépaisseur (30).

7. Jeton de consigne selon la revendication 2, **caractérisé en ce qu'**une partie de l'extrémité libre (23) de la languette (22) est configurée en guide à partir de la partie de prise (4).

8. Jeton de consigne selon la revendication 2, **caractérisé en ce que** la partie de prise (4) et la saillie en forme de pièce de monnaie (3) sont assemblées l'une à l'autre de façon rotative respectivement en sens opposé.

9. Jeton de consigne selon la revendication 2, **caractérisé en ce que** la saillie en forme de pièce de monnaie (3) est munie d'un trou (31), qui est disposé de façon décentrée sur la saillie en forme de pièce de monnaie (3).

10. Jeton de consigne selon une revendication 1 ou 2, **caractérisé en ce qu'**il est prévu un rétrécissement (18) entre la saillie en forme de pièce de monnaie (3) et la partie de prise (4).
